(19) **Europäisches Patentamt / European Patent Office / Office européen des brevets**

(11) **EP 3 042 059 B1**

(12) **FASCICULE DE BREVET EUROPEEN**

(45) Date de publication et mention
de la délivrance du brevet:
**30.08.2017 Bulletin 2017/35**

(21) Numéro de dépôt: **14786993.7**

(22) Date de dépôt: **01.09.2014**

(51) Int Cl.:
*F02C 7/228* (2006.01)        *F02C 9/34* (2006.01)
*F02C 7/232* (2006.01)        *F23K 5/04* (2006.01)

(86) Numéro de dépôt international:
**PCT/FR2014/052154**

(87) Numéro de publication internationale:
**WO 2015/033046 (12.03.2015 Gazette 2015/10)**

(54) **SYSTÈME CARBURANT À INJECTEURS MULTIPOINTS POUR UNE TURBOMACHINE ET PROCÉDÉ DE RÉGULATION ASSOCIÉ**

MEHRPUNKT-KRAFTSTOFFEINSPRITZSYSTEM FÜR EINE TURBOMASCHINE UND ZUGEHÖRIGES REGELUNGSVERFAHREN

MULTIPOINT FUEL INJECTION SYSTEM FOR A TURBOMACHINE AND ASSOCIATED REGULATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2013 FR 1358424**
**20.11.2013 FR 1361430**

(43) Date de publication de la demande:
**13.07.2016 Bulletin 2016/28**

(73) Titulaire: **SNECMA**
**75015 Paris (FR)**

(72) Inventeurs:
• **BERNARD, Clément**
**F-77550 Moissy-Cramayel Cedex (FR)**
• **PORA, Loïc**
**F-77550 Moissy-Cramayel Cedex (FR)**
• **CHALAUD, Sébastien**
**F-77550 Moissy-Cramayel Cedex (FR)**

(74) Mandataire: **Regimbeau**
**20, rue de Chazelles**
**75847 Paris Cedex 17 (FR)**

(56) Documents cités:
EP-A2- 1 988 267        EP-A2- 2 063 087
EP-A2- 2 535 644        GB-A- 2 320 063

## Description

<u>DOMAINE DE L'INVENTION</u>

La présente invention se rapporte au domaine des chambres de combustion des turbomachines, en particulier d'aéronef, et concerne plus particulièrement les systèmes d'injection d'air et de carburant dans ces chambres de combustion.

L'invention concerne plus précisément les systèmes d'injection à double circuit d'injection de carburant, qui comprennent un injecteur central, couramment appelé injecteur pilote, délivrant un débit de carburant permanent optimisé pour les bas régimes, ainsi qu'un injecteur périphérique, parfois appelé injecteur principal, qui délivre un débit de carburant intermittent optimisé pour les hauts régimes. Ces systèmes d'injection ont été développés pour permettre une meilleure adaptation de l'injection d'air et de carburant aux différents régimes de fonctionnement des chambres de combustion, afin de réduire leur consommation en carburant et leur émission de polluants tels que les oxydes d'azote et les fumées.

<u>ARRIERE-PLAN TECHNOLOGIQUE</u>

Une turbomachine d'avion comprend généralement un réservoir de carburant, une chambre de combustion et un système carburant adapté pour réguler l'écoulement de carburant à partir du réservoir de carburant vers la chambre de combustion.

Le système carburant comprend un ensemble d'injecteurs à combustible disposés dans la chambre de combustion, une pompe à carburant pour mettre sous pression du carburant à partir du réservoir de carburant, une unité de dosage de carburant FMU (acronyme anglais de Fuel Metering Unit) pour commander l'écoulement de carburant aux injecteurs, et un circuit d'alimentation en carburant reliant fluidiquement l'unité de dosage de carburant aux injecteurs de carburant.

Pendant le démarrage de la turbomachine, le carburant est pompé du réservoir de carburant vers le FMU par la pompe et, une fois qu'une pression de démarrage suffisante est atteinte, le FMU envoie du carburant aux injecteurs.

Le système carburant peut comprendre de multiples voies d'écoulement. Par exemple, un système carburant peut comprendre deux séries d'injecteurs (un ensemble principal et un ensemble secondaire), des canalisations pour chaque ensemble et une valve de division de débit agencée en aval du FMU.

Dans de tels systèmes, le carburant est délivré aux injecteurs primaires et secondaires en fonction du régime de la turbomachine. Par exemple, pendant le démarrage de la turbomachine, le carburant est initialement fourni uniquement aux injecteurs primaires par l'intermédiaire d'un circuit d'alimentation primaire. Cependant, une fois que le carburant provenant des injecteurs primaires de combustible qui brûle d'une manière régulière et satisfaisante, le carburant est par la suite en outre fourni aux injecteurs secondaires par l'intermédiaire d'un circuit d'alimentation secondaire. En d'autres termes, le circuit d'alimentation primaire fournit un écoulement pilote, qui déclenche le processus de combustion, tandis que le circuit d'alimentation secondaire présente un débit principal, adapté pour compléter et intensifier le processus de combustion, une fois que l'écoulement pilote brûle de façon constante.

Afin de réduire les problèmes liés à la présence de carburant résiduel dans les conduites du système carburant après que la turbomachine ait été arrêtée, le document US 5 809 771 propose de purger les conduites du système carburant à l'aide d'une valve connectée aux injecteurs pilotes et principaux, adaptée pour aspirer, stocker puis renvoyer le carburant lorsque la turbomachine est arrêtée.

Néanmoins, le fonctionnement du système carburant est commandé directement par la pression disponible en sortie du FMU, ce qui ne permet pas d'adapter suffisamment le débit au régime de la turbomachine, ni de faire évoluer les valeurs de répartition du carburant au cours du temps par exemple pour considérer le vieillissement de la turbomachine. Aussi, dans le document US 5 809 771, le carburant est purgé seulement à la coupure de la turbomachine. Par ailleurs, la mise en oeuvre de deux circuits d'alimentation en carburant implique souvent des pertes de charge différentes entre les deux circuits.

Enfin, le circuit d'alimentation principal étant à débit intermittent, du coke risque de se former dans les conduites sous l'effet des conditions sévères que peut subir le système carburant, notamment en température.

On a proposé dans le document EP 2 535 644 un système carburant pour une turbomachine, adapté pour injecter du carburant dans une chambre de combustion de la turbomachine comprenant un circuit pilote, un circuit principal et un régulateur de débit. Toutefois, ce système carburant ne comprend pas de moyen permettant d'éviter la formation de coke lorsque le circuit principal n'est pas passant.

Le document EP 2 063 087 quant à lui décrit également un système carburant pour une turbomachine, adapté pour injecter du carburant dans une chambre de combustion de la turbomachine comprenant un circuit pilote, un circuit principal et un régulateur de débit. Ce document propose en outre de purger les circuits lorsque le moteur est arrêté. Les moyens de purge ne sont toutefois pas précisés.

Enfin, le document EP 1 988 267 décrit un système carburant pour une turbomachine, adapté pour injecter du carburant dans une chambre de combustion de la turbomachine comprenant un circuit pilote, deux circuits principaux, un régulateur de débit et un réservoir de purge. La configuration du système carburant est telle, qu'ici encore il ne permet de purger les circuits principaux qu'à la coupure de la turbomachine.

RESUME DE L'INVENTION

Un objectif de l'invention est de proposer un système carburant, notamment pour une turbomachine d'avion, comprenant deux lignes d'alimentation en carburant configurées pour injecter du carburant dans la chambre de combustion en fonction du régime de la turbomachine, en limitant les risques de formation de coke, et le cas échéant en s'affranchissant des différences de pertes de charge entre les deux circuits et.

Pour cela, l'invention propose un système carburant pour une turbomachine, adapté pour injecter du carburant dans une chambre de combustion de la turbomachine, comprenant :

- un circuit pilote, adapté pour injecter du carburant dans la chambre de combustion,
- un circuit principal, adapté pour injecter du carburant dans la chambre de combustion, et
- un régulateur de débit, adapté pour réguler la répartition du débit du carburant entre le circuit pilote et le circuit principal en fonction du régime de la turbomachine, ledit régulateur de débit comprenant un tiroir mobile entre une première configuration, dans laquelle le circuit principal est obturé et le circuit pilote est passant, et une deuxième configuration dans laquelle à la fois le circuit principal et le circuit pilote sont passants, et
- un réservoir de carburant, une pompe haute pression, adaptée pour mettre en pression le carburant en sortie du réservoir de carburant, et un réservoir de purge, connecté d'un côté sélectivement au réservoir ou à la pompe haute pression, et d'un autre côté au circuit principal, ledit réservoir de purge étant adapté pour aspirer, stocker et purger du carburant dans le circuit principal en fonction de la différence de pression entre le circuit principal et le réservoir ou la pompe haute pression auquel il est connecté.

Certaines caractéristiques préférées mais non limitatives du système carburant décrit ci-dessus sont les suivantes :

- il comprend en outre en aval du régulateur de débit, un régulateur de pression adapté pour modifier la pression dans le circuit pilote et le circuit principal et réduire les différences de pertes de charges entre le circuit pilote et le circuit principal en amont du régulateur de pression,
- le réservoir de purge est connecté au circuit principal en aval du régulateur de pression,
- le réservoir de purge est piloté par le régulateur de débit qui connecte sélectivement le réservoir de purge au réservoir de carburant ou à la pompe haute pression, de sorte que :

    * dans la première configuration du tiroir, le réservoir de purge est connecté au réservoir et stocke du carburant contenu dans le circuit principal, et

    * dans la deuxième configuration du tiroir, le réservoir de purge est connecté à la pompe haute pression et purge dans le circuit principal le carburant stocké lorsque le tiroir était dans la première configuration,

- le régulateur de pression comprend des moyens de régulation adaptés pour modifier une section de passage du circuit principal et du circuit pilote en aval du régulateur de débit afin limiter les pertes de charges dans lesdits circuits,
- les moyens de régulation sont pilotés par deux pressions antagonistes correspondant respectivement à la pression à l'entrée du circuit pilote et à la pression à l'entrée du circuit principal afin d'adapter la section de passage desdits circuits principal et pilote,
- les moyens de régulation comprennent en outre un tiroir adapté pour ajuster la section de passage du circuit principal et du circuit pilote, la position du tiroir étant en équilibre dynamique en fonction de la pression à l'entrée du circuit pilote et de la pression à l'entrée du circuit principal,
- il comprend en outre une unité de dosage de carburant FMU en amont du régulateur de débit, et
- le régulateur de débit est actionné par une servovalve et comprend en outre un capteur électrique passif de déplacements linéaires LVDT adapté pour déterminer la configuration du tiroir dans le régulateur de débit.

Selon un deuxième aspect, l'invention propose également une turbomachine comprenant un système carburant adapté pour injecter du carburant dans la chambre de combustion de la turbomachine comme décrit ci-dessus.

Selon un troisième aspect, l'invention propose un procédé de régulation, mettant en oeuvre un système carburant injectant du carburant présentant un débit d'entrée dans une chambre de combustion d'une turbomachine par l'intermédiaire d'un circuit pilote et d'un circuit principal comme décrit ci-dessus, ledit procédé de régulation comprenant les étapes suivantes :

- réguler la répartition du débit du carburant dans le circuit pilote et dans le circuit principal en fonction du régime de la turbomachine, en déplaçant le tiroir mobile entre la première configuration, dans laquelle le circuit principal est obturé et le circuit pilote est passant, et la deuxième configuration dans laquelle à la fois le circuit principal et le circuit pilote sont passants, et
- piloter le réservoir de purge en fonction de la position du tiroir mobile du régulateur de débit, en connectant sélectivement le réservoir de purge au réservoir ou la pompe haute pression de manière à aspirer, stocker ou purger du carburant dans le circuit principal.

Certaines caractéristiques préférées mais non limitatives du procédé de régulation décrit ci-dessus sont les suivantes :

- la répartition du débit d'entrée du carburant entre le circuit pilote et le circuit principal est régulée en contrôlant la position du tiroir mobile qui modifie une section de passage du carburant en entrée du circuit pilote et une section de passage du carburant en entrée du circuit principal, le circuit pilote et le circuit principal recevant ainsi chacun une fraction du débit d'entrée, chaque position du tiroir mobile fixant la fraction du débit d'entrée reçue par le circuit pilote et la fraction du débit d'entrée reçue par le circuit principal, quelle que soit le débit d'entrée du carburant, permettant ainsi une régulation de la répartition du débit d'entrée à partir du contrôle de la position du tiroir, et le procédé comprend en outre une étape au cours de laquelle la répartition du débit d'entrée du carburant est corrigée de sorte à respecter un débit minimal ou maximal de carburant à recevoir pour le circuit pilote et/ou le circuit principal ;
- le procédé comprend l'étape consistant à rendre égales la pression dans le circuit principal, en amont d'un régulateur de pression du système carburant, et la pression dans le circuit pilote, en amont dudit régulateur de pression ;
- le procédé comprend les étapes consistant à sélectionner une fraction X du débit d'entrée du carburant à recevoir par le circuit pilote ou par le circuit principal, avec X compris entre 0 et 100%, et déplacer le tiroir mobile à une position permettant d'obtenir ladite fraction X ;
- le circuit pilote et le circuit principal présentent un orifice d'entrée ayant une section de forme identique, le procédé comprenant l'étape consistant à fixer la fraction Xcircuit du débit d'entrée du carburant reçue par le circuit pilote (9a), respectivement par le circuit principal (9b), à partir de la formule :

$$X_{circuit} = \frac{S_{circuit}}{S_{pilote} + S_{principal}}$$ , avec $S_{circuit}$ la surface de la section de passage du carburant en entrée du circuit pilote, respectivement du circuit principal, $S_{pilote}$ la surface de la section de passage du carburant du circuit pilote, et $S_{principal}$ la surface de la section de passage du carburant du circuit principal ;

- le circuit pilote et le circuit principal présentent un orifice d'entrée ayant une section de forme différente, le procédé comprenant l'étape consistant à fixer la fraction $X_{circuit}$ du débit d'entrée du carburant reçue par le circuit pilote, respectivement par le circuit principal, à partir de la formule:

$$X_{circuit} = \frac{K_{circuit} S_{circuit}}{K_{pilote} S_{pilote} + K_{principal} S_{principal}},$$

avec $S_{circuit}$ la surface de la section de passage du carburant en entrée du circuit pilote, respectivement du circuit principal, $K_{circuit}$ une constante liée à la forme de la section de l'orifice d'entrée du circuit pilote, respectivement du circuit principal, $S_{pilote}$ la surface de la section de passage du carburant du circuit pilote, et $S_{principal}$ la surface de la section de passage du carburant du circuit principal ;

- le procédé comprend l'étape consistant à, en fonction d'une plage de débit minimal et maximal pour le circuit pilote et le circuit principal, contrôler la position du tiroir mobile de sorte à cantonner la surface de la section de passage du carburant du circuit pilote, respectivement du circuit principal, dans un intervalle donné, de sorte qu'une perte de charge du circuit pilote, respectivement du circuit principal, soit dans un intervalle prédéfini.

Le travail menant à cette invention a reçu un financement du Programme Seventh Framework FP7/2007-2013 de l'Union Européenne dans le cadre de la convention de subvention n° ACP1-GA-2011-283216-LEMCOTEC.

## BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

La figure 1 illustre un exemple de réalisation d'un système de carburant d'une turbomachine selon l'invention dans une première configuration, correspondant à un faible régime de la turbomachine,

La figure 2 illustre le système carburant de la figure 1, dans une configuration de transition entre la première configuration et une deuxième configuration, correspondant à un changement de régime de la turbomachine,

La figure 3 illustre le système carburant de la figure 1 dans la deuxième configuration, correspondant à un régime important de la turbomachine,

La Figure 4 illustre des étapes d'un mode de réalisation d'un procédé de régulation de la répartition du carburant entre le circuit pilote et le circuit principal, et

La Figure 5 illustre des étapes de correction de la répartition du carburant en fonction de contraintes de débit pour l'un des circuits.

## DESCRIPTION DETAILLEE D'UN MODE DE REALISATION

### *Système carburant*

Un système carburant 1 comprend, d'amont en aval dans le sens de l'écoulement du carburant,

- un réservoir de carburant 5,
- une pompe haute pression 6, adaptée pour mettre sous pression du carburant du réservoir, et
- une unité de dosage de carburant FMU 7, alimentée en carburant par la pompe haute pression 6 et adaptée pour commander l'écoulement du carburant vers la chambre de combustion 8 par l'intermédiaire d'un circuit d'alimentation en carburant.

Le circuit d'alimentation en carburant comprend ici deux séries d'injecteurs 8a, 8b, associés chacun à un circuit d'alimentation 9a, 9b et un régulateur de débit 2 (ou valve de division de débit), agencés en aval du FMU 7.

Plus précisément, le circuit d'alimentation comprend un circuit pilote 9a, adapté pour injecter en continu du carburant dans la chambre de combustion 8 par l'intermédiaire de d'injecteurs pilotes 8a, et un circuit principal 9b, adapté pour injecter par intermittence du carburant dans la chambre de combustion 8 par l'intermédiaire d'injecteurs principaux 8b.

Le débit des circuits pilote 9a et principal 9b est piloté à l'aide du régulateur de débit 2, disposé entre le FMU 7 et les injecteurs pilote 8a et principal 8b. Le régulateur de débit 2 ajuste la répartition de débit entre chaque circuit d'alimentation 9a, 9b en fonction du régime de la turbomachine, et peut être actionné par exemple par une servovalve 20.

Enfin, le système carburant 1 comprend également un régulateur de pression 3, disposé en aval du régulateur de débit 2, et adapté pour modifier la pression dans le circuit pilote 9a et le circuit principal 9b dans le but de réduire ou d'éliminer les différences de pertes de charge entre les deux circuits 9a et 9b en amont du régulateur de pression 3.

Plus précisément, le régulateur de débit 2 comprend :

- un orifice d'entrée 22 du carburant en provenance du réservoir, par l'intermédiaire de la pompe haute pression 6 et du FMU 7,
- un orifice de refoulement pilote 24a, adapté pour refouler du carburant dans le circuit pilote 9a vers l'injecteur pilote 8a,
- un orifice de refoulement principal 24b, adapté pour refouler du carburant dans le circuit principal 9b vers l'injecteur principal 8b, et
- un tiroir mobile 26, comprenant une première configuration dans laquelle le tiroir 26 obture l'orifice de refoulement principal 24b, l'orifice de refoulement pilote 24a étant passant, et une deuxième configuration dans laquelle à la fois l'orifice de refoulement pilote 24a et l'orifice de refoulement principal 24b sont passants. Dans la première configuration, du carburant est donc injecté dans la chambre de combustion 8 par l'injecteur pilote 8a uniquement, tandis que dans la deuxième configuration, l'injecteur principal 8b injecte également du carburant dans la chambre de combustion 8. Dans cette configuration, la position du tiroir 26 permet de respecter un pourcentage de répartition du débit entre le circuit pilote 9a et le circuit principal 9b.

La position du tiroir 26 du régulateur de débit 2 est commandée par la servovalve 20. Le système carburant 1 peut en outre comprendre un capteur électrique passif de déplacements linéaires LVDT 21 (acronyme anglais de Linear Variable Differential Transformer) permettant d'avoir un retour d'information sur la configuration du tiroir 26 dans le régulateur de débit 2.

Le régulateur de pression 3 quant à lui comprend :

- un orifice d'admission pilote 30a du carburant en provenance de l'orifice de refoulement pilote 24a,
- un orifice d'admission principal 30b du carburant en provenance de l'orifice de refoulement principal 24b,
- un orifice de sortie pilote 32a, adapté pour refouler du carburant du circuit pilote 9a vers l'injecteur pilote 8a,
- un orifice de sortie principal 32b, adapté pour refouler du carburant du circuit principal 9b vers l'injecteur principal 8b,
  chaque ensemble d'orifices d'admission 30a, 30b et de sortie 32a, 32b étant connecté par une ligne d'alimentation du circuit correspondant, et
- des moyens de régulation, adaptés pour modifier la section de passage des lignes du circuit principal 9b et du circuit pilote 9a entre le régulateur de débit 2 et les injecteurs principal 8b et pilote 8a, respectivement, afin limiter les pertes de charges dans ces circuits 9a, 9b.

Les moyens de régulation du régulateur de pression 3 comprennent un tiroir 38 mobile, adapté pour modifier la section de passage du carburant dans les lignes du circuit principal 9b et du circuit pilote 9a, entre le régulateur de débit 2 et les injecteurs 8a, 8b.

Par exemple, le tiroir 38 est piloté par deux pressions antagonistes correspondant respectivement à la pression Pa au niveau de l'orifice d'admission pilote 30a et à la pression Pb au niveau de l'orifice d'admission principal 30b. A cet effet, la position du tiroir 38 est pilotée par les pressions antagonistes Pa et Pb à l'aide d'une canalisation pilote, adaptée pour repiquer la pression au niveau de l'orifice d'admission pilote 30a et appliquer cette pression à un premier côté du tiroir 38, et d'une canalisation principale, adaptée pour repiquer la pression au niveau de l'orifice d'admission principal 30b et appliquer cette pression à un deuxième côté du tiroir 38. De la sorte, le tiroir 38 se trouve en équilibre dynamique en fonction des pressions Pa et Pb à l'entrée du régulateur 3 dans chacun des circuits d'alimentation des injecteurs pilote 8a et principal 8b.

Sur les figures annexées, le circuit principal 9b se trouve à gauche tandis que le circuit pilote 9a se trouve à droite. La pression Pa repiquée dans le circuit pilote 9a est donc appliquée au côté gauche du tiroir 38, tandis la pression Pb repiquée dans le circuit principal 9b est appliquée au côté droit du tiroir 38.

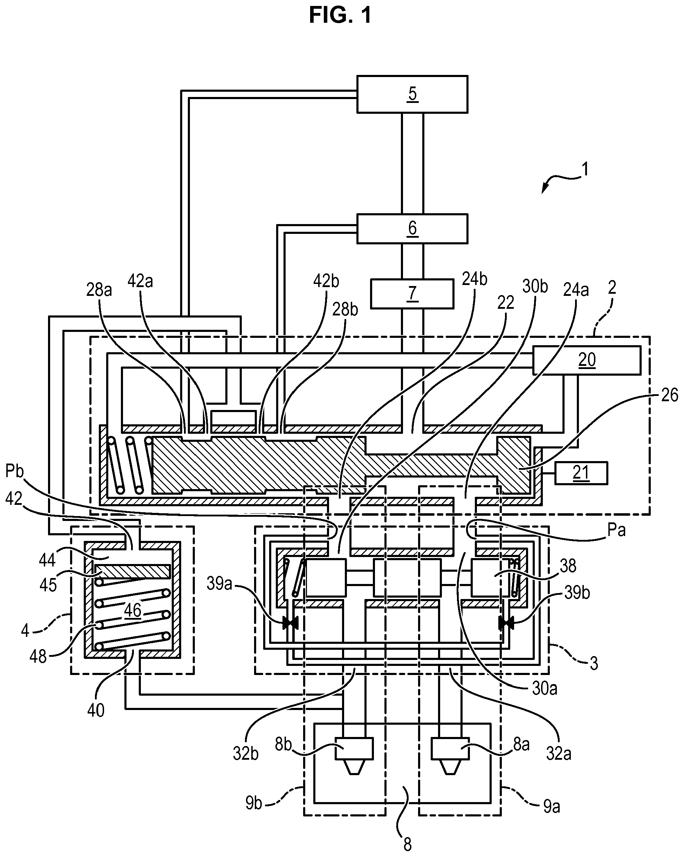

Ainsi, lorsque seul le circuit pilote 9a est alimenté en carburant par le régulateur de débit 2, la pression Pa au niveau de l'orifice d'admission pilote 30a est supérieure à la pression Pb au niveau de l'orifice d'admission principal 30b. Afin de ne pas ajouter de pertes de charges, le tiroir 38 se déplace donc de telle sorte qu'il n'obture pas la ligne d'alimentation du circuit pilote 9a (figure 1).

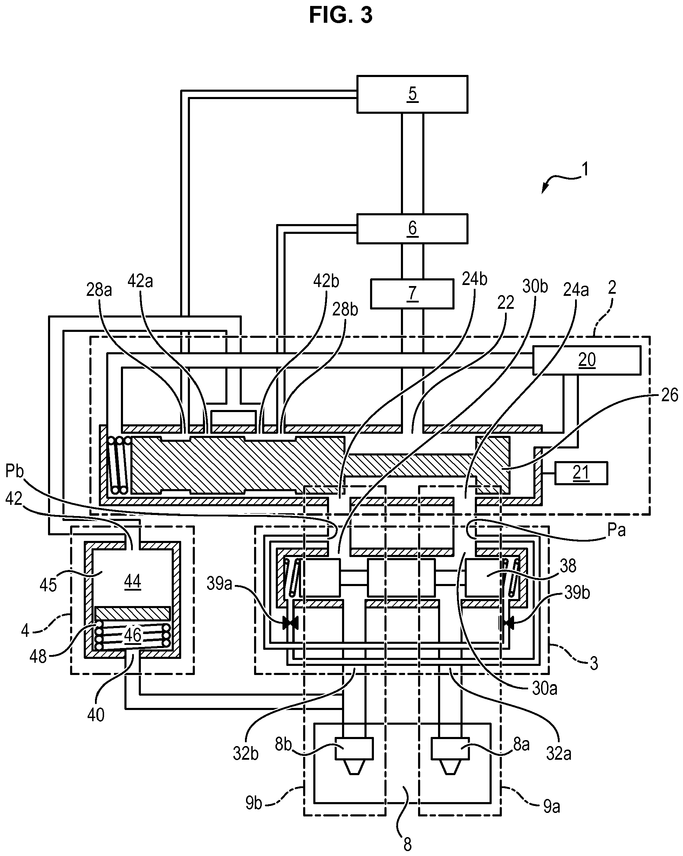

En revanche, lorsque le circuit principal 9b est également alimenté en carburant par le régulateur de débit 2, la pression Pb augmente au niveau de l'orifice d'admission principal 30b, ce qui déplace le tiroir 38 du régulateur de pression 3 de telle sorte que les pressions en entrée du régulateur de pression 3 dans le circuit principal 9b et dans le circuit pilote 9a soient égales. Ainsi, sur la figure 3, le tiroir 38 s'est déplacé vers la gauche par rapport à la figure 1.

La position du tiroir 38 du régulateur de pression 3 est alors déterminée en fonction de la valeur des pressions Pa et Pb. Par exemple, si la pression Pb (au niveau de l'orifice d'admission principal 30b) est plus importante que la pression Pa (au niveau de l'orifice d'admission pilote 30a), le tiroir 38 se déplace afin de réduire la section de passage dans la ligne d'alimentation du circuit pilote 9a en l'obturant partiellement et d'agrandir la section de passage dans la ligne d'alimentation du circuit principal 9b, ce qui a pour conséquences d'ajouter des pertes de charges dans le circuit pilote 9a et de les réduire dans le circuit principal 9b. Ici, grâce aux canalisations principale et pilote qui repiquent la pression au niveau de leur orifice d'admission 30a, 30b respectif, le tiroir 38 se déplace donc vers la gauche.

Dans une forme de réalisation, le régulateur de pression 3 peut en outre comprendre des limiteurs de débit 39a, 39b disposés sur les canalisations principale et secondaire, adaptés pour lisser le débit et éviter d'éventuels pics de pression dus aux changements d'état (passant/obturé) du circuit principal 9b.

Le système carburant 1 comprend en outre un réservoir de purge 4, adapté pour aspirer, stocker et renvoyer du carburant dans la ligne d'alimentation du circuit principal 9b. Les objectifs sont de purger le circuit 9b lors de la non-utilisation de ce circuit pour éviter la formation de coke, de conserver le carburant puis de le renvoyer dans le circuit 9b afin de pré-emplir la ligne lorsque le circuit principal 9b passe de l'état obturé à l'état passant.

A cet effet, le réservoir de purge 4 comprend un orifice de purge 40, connecté à la ligne d'alimentation du circuit principal 9b, de préférence entre l'orifice de sortie principal 32b du régulateur de pression 3 et l'injecteur principal 8b, et un orifice d'actionnement 42, connecté sélectivement au réservoir de carburant 5 ou à la pompe haute pression 6, de préférence par l'intermédiaire du régulateur de débit 2. Pour cela, l'orifice d'actionnement 42 est relié à un premier orifice 42a du régulateur 2, adapté pour venir en communication fluidique avec un deuxième orifice 28a du régulateur 2 lorsque le tiroir 26 est dans sa première configuration, et un troisième orifice 42b du régulateur 2 adapté pour venir en communication fluidique avec un deuxième orifice 28b du régulateur 2 lorsque le tiroir 26 est dans sa deuxième configuration.

Le réservoir de purge 4 fonctionne de manière analogue à un accumulateur hydraulique et comprend une paroi de séparation 45 mobile délimitant une cavité d'actionnement 44 et une cavité de purge 46. De la sorte, selon que le réservoir de purge 4 soit connecté au réservoir de carburant 5 ou à la pompe haute pression 6, la différence de pression entre l'orifice d'actionnement 42 et l'orifice de purge 40 déplace la paroi de séparation 45 du réservoir de purge 4. En effet, la pression au niveau de l'orifice de purge 40 est égale à la pression dans le circuit principal 9b, au niveau de l'injecteur 8b, tandis que la pression au niveau de l'orifice d'actionnement 42 est soit égale à la pression du réservoir de carburant 5, soit à la pression en sortie de la pompe haute pression 6.

La paroi de séparation 45 peut en outre être sollicitée vers une position de repos à l'aide d'un ressort 48 en compression. La raideur du ressort 48 est déterminée en fonction du volume désiré pour les cavités d'actionnement 44 et de purge 46 du réservoir de purge 4 ainsi que des pressions d'actionnement disponibles.

Selon une forme de réalisation, le réservoir de purge 4 est piloté par le régulateur de débit 2, de sorte que la configuration du tiroir 26 du régulateur de débit 2 détermine la configuration du réservoir de purge 4.

Ainsi, dans la première configuration du régulateur de débit 2, l'orifice d'actionnement 42 du réservoir de purge 4 est connecté au réservoir de carburant 5 par l'intermédiaire des premier 42a et deuxième 28a orifices. La pression dans la cavité d'actionnement 44 est donc égale à la pression du réservoir de carburant 5, tandis que la pression dans la cavité de purge 46 est égale à la pression dans le circuit principal 9b, au niveau de l'injecteur principal 8b. La pression dans le circuit principal 9b étant plus élevée que dans le réservoir de carburant 5, la paroi de séparation 45 du réservoir de purge 4 se place du côté de l'orifice d'actionnement 42.

Dans la deuxième configuration du régulateur de débit 2, l'orifice d'actionnement 42 du réservoir de purge 4 est connecté à la pompe haute pression 6 par l'intermédiaire des troisième 42b et quatrième 28b orifices. La pression dans la cavité d'actionnement 44 est donc égale à la pression de la pompe haute pression 6, tandis que la pression dans la cavité de purge 46 reste égale à la pression dans le circuit principal 9b. La pression dans le circuit principal 9b étant plus faible qu'au niveau de la pompe haute pression 6, la paroi du réservoir de purge 4 se déplace donc en direction de l'orifice de purge 40.

Avantageusement, le tiroir 26 du régulateur de débit 2 est agencé afin de connecter l'orifice d'actionnement 42 du réservoir de purge 4 à la pompe haute pression 6 via le deuxième passage 28b avant qu'il n'atteigne sa deuxième configuration, afin que le réservoir de purge 4 puisse expulser le carburant qu'il contient dans sa cavité de purge 46 vers le circuit principal 9b avant que le régulateur de débit 2 ne permette au carburant d'entrer dans le circuit principal 9b par l'intermédiaire du régulateur de pression 3.

Le système carburant 1 peut alors fonctionner comme suit.

En cas de faible poussée (figure 1), seul le circuit pilote 9a est débitant, le circuit principal 9b étant obturé. Le tiroir 26 du régulateur de débit 2 est donc dans sa première configuration, c'est-à-dire qu'il obture l'orifice de refoulement principal 24b, l'orifice de refoulement pilote 24a étant passant.

Le carburant est mis sous pression par la pompe 6, sur commande du FMU 7, puis injecté dans le régulateur de débit 2. Le tiroir 26 étant dans sa première configuration, le carburant passe uniquement dans le circuit d'alimentation pilote 9a, de sorte que la pression Pa (au niveau de l'orifice d'admission pilote 30a) est plus importante dans le circuit pilote 9a que dans le circuit principal 9b. Le tiroir 38 du régulateur de pression 3 se positionne donc de manière à ne pas ajouter de pertes de charge sur la ligne pilote : ici, le tiroir 38 est donc piloté vers la droite par la pression Pa.

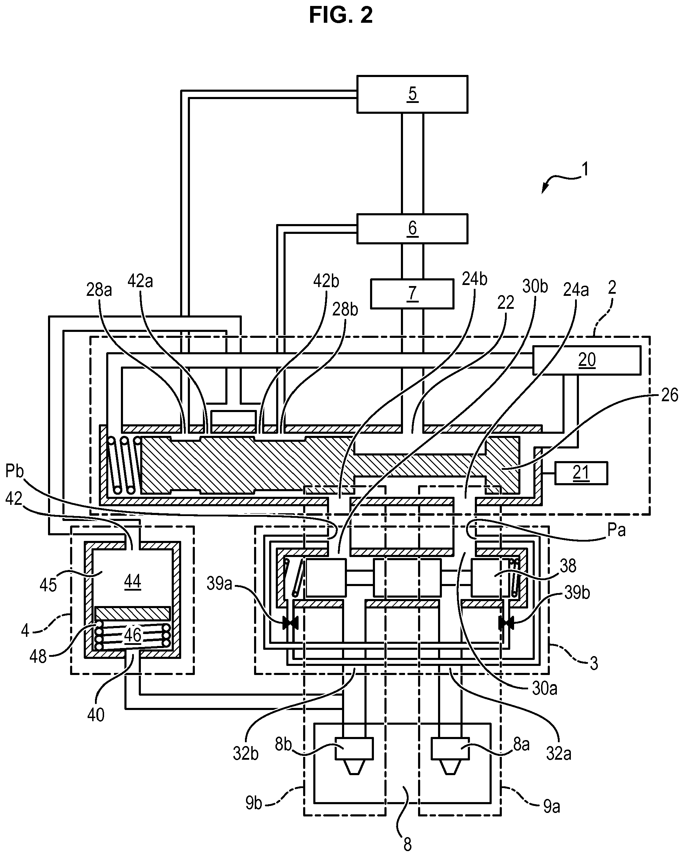

Par ailleurs, dans cette première configuration du tiroir 26 du régulateur de débit 2, le réservoir de purge 4 est connecté au réservoir de carburant 5. La pression dans la cavité d'actionnement 44 est donc plus faible que la pression dans la cavité de purge 46 de sorte que la paroi de séparation 45 est adjacente à l'orifice d'actionnement 42. La cavité de purge 46 contient donc du carburant, qui a été préalablement aspiré dans le circuit principal 9b (voir la description ci-dessous en relation avec les figures 2 et 3).

Lorsque la poussée devient plus importante (figure 3), le circuit principal 9b doit également être débitant. Le tiroir 26 du régulateur de débit 2 passe donc dans sa deuxième configuration afin de rendre passant l'orifice de refoulement principal 24b, l'orifice de refoulement pilote 24a restant passant.

Le carburant est toujours mis sous pression par la pompe 6, sur commande du FMU 7, puis injecté dans le régulateur de débit 2. Le tiroir 26 étant dans sa deuxième configuration, le carburant passe à la fois dans le circuit pilote 9a et dans le circuit principal 9b. La pression Pb (au niveau de l'orifice d'admission principal 30b) augmente donc, de sorte que le tiroir 38 du régulateur de pression 3 se déplace afin de limiter les pertes de charges à la fois dans le circuit pilote 9a et dans le circuit principal 9b. Dans l'exemple de réalisation illustré sur les figures, le tiroir 38 est piloté vers la gauche par la différence de pression entre Pa et Pb, jusqu'à ce qu'il arrive à son point d'équilibre, c'est-à-dire lorsque les pressions Pa, Pb au niveau des orifices de refoulement pilote 32a et principal 32b sont égales.

Lorsque le tiroir 26 du régulateur de débit 2 passe de la première configuration à la deuxième configuration (figure 2), l'orifice d'actionnement 42 du réservoir de purge 4, qui était connecté au réservoir de carburant 5, devient connecté à la pompe haute pression 6. La pression dans la cavité d'actionnement 44 devient donc plus importante que la pression dans la cavité de purge 46 de sorte que la paroi de séparation 45 se déplace en direction de l'orifice de purge 40. Le carburant contenu dans la cavité de purge 46 est alors éjecté dans la ligne d'alimentation du circuit principal 9b, entre le régulateur de pression 3 et l'injecteur principal 8b, ce qui permet de pré-remplir la ligne d'alimentation, et donc de réduire le temps de réponse pour l'injection de carburant dans la chambre de combustion 8 via le circuit principal 9b.

Lorsque le tiroir 26 du régulateur de débit 2 arrive dans sa deuxième configuration, l'orifice d'actionnement 42 est encore connecté à la pompe haute pression 6, de sorte que la paroi de séparation 45 reste du côté de l'orifice de purge 40. En effet, la pression du carburant en sortie de la pompe haute pression 6 est plus importante que la pression du carburant dans le circuit principal 9b, en raison de la présence des régulateurs 2, 3 et du FMU 7, entre la pompe 6 et l'injecteur principal 8b, qui ajoutent des pertes de charge.

On comprendra bien entendu que le passage de la première configuration à la deuxième configuration du tiroir 26 du régulateur de débit 2, et inversement, est continu. L'étape au cours de laquelle le réservoir de purge 4 injecte le carburant contenu dans sa cavité de purge 46 dans le circuit principal 9b a donc lieu juste avant celle au cours de laquelle le circuit principal 9b devient passant.

Lorsque la poussée redevient faible (figure 1), seul le circuit pilote 9a doit être débitant, le circuit principal 9b devant être obturé. Le tiroir 26 du régulateur de débit 2 revient donc dans sa première configuration, afin d'obturer l'orifice de refoulement principal 24b, l'orifice de refoulement pilote 24a restant passant.

Le carburant passe donc à nouveau uniquement dans le circuit pilote 9a, de sorte que la pression Pa (au niveau de l'orifice d'admission pilote 30a) redevient plus importante dans le circuit pilote 9a que dans le circuit principal 9b. Le tiroir 38 du régulateur de pression 3 est donc déplacé de manière à ne pas ajouter de pertes de charge sur la ligne pilote : ici, le tiroir 38 est donc piloté vers la droite par la pression Pa.

Par ailleurs, lorsque le tiroir 26 du régulateur de débit 2 revient dans sa première configuration, l'orifice d'actionnement 42 du réservoir de purge 4 est reconnecté au réservoir de carburant 5. La pression dans la cavité d'actionnement 44 est donc plus faible que la pression dans la cavité de purge 46 de sorte que la paroi de séparation 45 se déplace en direction de l'orifice d'actionnement 42. Du carburant contenu dans le circuit principal 9b est donc aspiré afin de remplir la cavité de purge 46 et de limiter la formation de coke dans le circuit principal 9b.

### *Procédé de régulation*

On décrit à présent un procédé de régulation mettant en oeuvre le système carburant décrit précédemment. Il s'applique à l'ensemble des variantes du système tel que décrit précédemment.

Le carburant arrivant au niveau du régulateur de débit 2, en provenance de l'unité de dosage de carburant FMU 7, présente un débit d'entrée donné, qu'il convient de répartir entre le circuit pilote 9a et le circuit principal 9b.

Un procédé de régulation comprend l'étape consistant à réguler la répartition du débit d'entrée du carburant entre le circuit pilote 9a et le circuit principal 9b en contrôlant la position du tiroir 26 mobile.

Ce procédé de régulation peut être géré par une unité de traitement, de type calculateur, qui commande la servovalve 20 et reçoit en entrée des commandes de répartition du débit d'un opérateur, ou d'autres systèmes d'un aéronef, comme une unité centrale de l'aéronef.

Le tiroir 26 mobile permet de modifier une section $S_{pilote}$ de passage du carburant en entrée du circuit pilote 9a et une section $S_{principale}$ de passage du carburant en entrée du circuit principal 9b, le circuit pilote 9a et le circuit principal 9b recevant ainsi chacun une fraction du débit d'entrée.

La section $S_{pilote}$ correspond à la section découverte de l'orifice de refoulement 24a qui se trouve à l'entrée du circuit pilote 9a, et la section $S_{principale}$ correspond à la section découverte de l'orifice de refoulement 24b qui se trouve à l'entrée du circuit principal 9b.

En fonction de la position en translation du tiroir 26 mobile, la surface de ces sections découvertes sera plus ou moins grande.

Ainsi, le circuit pilote 9a reçoit une fraction X du débit d'entrée (X% du débit d'entrée du carburant), et le circuit principal 9b reçoit une fraction complémentaire 1-X du débit d'entrée ((1-X)% du débit d'entrée du carburant).

Le débit W à l'entrée de chacun des circuits 9a, 9b s'écrit :

$$W = K.S.\sqrt{\Delta P \rho}$$

Dans cette formule :

- K est une constante dépendant de la forme de la section de l'orifice d'entrée du circuit, respectivement pilote et principal (c'est-à-dire ici de l'orifice de refoulement 24a, respectivement 24b, du régulateur de débit 2) ;

- S la surface de la section de passage du carburant en entrée du circuit, respectivement pilote et principal (en l'occurrence la surface de la section découverte de l'orifice de refoulement 24a, respectivement 24b);

- $\Delta P$ la perte de charge, correspondant à la différence de pression entre l'entrée du régulateur de débit et l'entrée du circuit, respectivement pilote et principal ;

- p la masse volumique du carburant.

Dans le cas où les pertes de charge $\Delta P$ sont égales pour le circuit pilote 9a et le circuit principal 9b, et que les constantes K sont égales pour le circuit pilote 9a et le circuit principal 9b (dans le cas de sections d'entrée du circuit pilote et du circuit principal de formes identiques), la fraction $X_{circuit}$ du débit d'entrée du carburant reçue par le circuit pilote 9a, respectivement par le circuit principal 9b est déterminée à partir de la formule:

$$X_{circuit} = \frac{S_{circuit}}{S_{pilote} + S_{principal}},$$

Dans cette formule :

- $S_{circuit}$ est la surface de la section de passage du carburant en entrée du circuit pilote 9a, respectivement du circuit principal 9b. Il s'agit de la surface de la section de l'orifice de refoulement 24a, respectivement 24b, du régulateur de débit, laissée découverte par le tiroir 26 mobile,

- $S_{pilote}$ est la surface de la section de passage en entrée du carburant du circuit pilote 9a. Il s'agit de la surface de la section de l'orifice de refoulement 24a du régulateur de débit, laissée découverte par le tiroir 26 mobile, et

- $S_{principal}$ est la surface de la section de passage du carburant en entrée du circuit principal 9b. Il s'agit de la surface de la section de l'orifice de refoulement 24b du régulateur de débit, laissée découverte par le tiroir 26 mobile.

Cette formule permet donc de fixer la fraction du débit d'entrée à recevoir par chaque circuit à partir de la position du tiroir mobile.

En effet, la position du tiroir 26 mobile fixe la section de passage du carburant à l'entrée du circuit pilote 9a et à l'entrée du circuit principal 9b.

Par conséquent, chaque position du tiroir 26 mobile fixe la fraction $X_{pilote}$ du débit d'entrée reçue par le circuit pilote 9a et la fraction $X_{principal}$ du débit d'entrée reçue par le circuit principal 9b, quelle que soit le débit d'entrée du carburant, permettant ainsi une régulation de la répartition du débit d'entrée à partir du contrôle de la position du tiroir 26.

La loi de commande de la répartition du débit d'entrée entre le circuit pilote 9a et le circuit principal 9b est donc simplifiée, car elle dépend uniquement de la position du tiroir 26 mobile, et ne dépend pas de la valeur du débit d'entrée. La position du tiroir 26 mobile est connue de par le capteur de déplacement 21.

En outre, l'utilisation d'un unique tiroir 26 mobile permet de s'affranchir d'erreurs résultant de l'utilisation de plusieurs doseurs, qui s'additionnent dans le cas d'une pluralité de doseurs.

Dans le cas où les pertes de charge ΔP sont différentes en entrée du circuit pilote 9a et du circuit principal 9b, le procédé comprend la mise en place et l'utilisation du régulateur de pression 3 dans le système carburant 1. Ce régulateur de pression permet de rendre égales :

-    la pression Pb dans le circuit principal 9b, en amont du régulateur de pression 3 du système carburant 1, et
-    la pression Pa dans le circuit pilote 9a, en amont dudit régulateur de pression 3.

Ainsi, le contrôle de la répartition du débit dépend uniquement de la position du tiroir 26 mobile.

Dans le cas où le circuit pilote 9a et le circuit principal 9b présentent un orifice d'entrée ayant une section de forme différente, c'est-à-dire que l'orifice de refoulement 24a et l'orifice de refoulement 24b présentent une section d'entrée de formes différentes, la fraction $X_{circuit}$ du débit d'entrée du carburant reçue par le circuit pilote 9a, respectivement par le circuit principal 9b est déterminée à partir de la formule :

$$X_{circuit} = \frac{K_{circuit}S_{circuit}}{K_{pilote}S_{pilote} + K_{principal}S_{principal}}$$

Dans cette formule :

-    $S_{circuit}$ est la surface de la section de passage du carburant en entrée du circuit pilote 9a, respectivement du circuit principal 9b. Il s'agit de la surface de la section de l'orifice de refoulement 24a, respectivement 24b, du régulateur de débit, laissée découverte par le tiroir 26 mobile,
-    $K_{circuit}$ est une constante dépendant de la forme de la section de l'orifice d'entrée du circuit, respectivement pilote ($K_{pilote}$) et principal ($K_{principal}$) (c'est-à-dire de l'orifice de refoulement du régulateur de débit),
-    $S_{pilote}$ est la surface de la section de passage du carburant en entrée du circuit pilote 9a. Il s'agit de la surface de la section de l'orifice de refoulement 24a du régulateur de débit, laissée découverte par le tiroir 26 mobile, et
-    $S_{principal}$ est la surface de la section de passage du carburant en entrée du circuit principal 9b. Il s'agit de la surface de la section de l'orifice de refoulement 24a du régulateur de débit, laissée découverte par le tiroir 26 mobile.

Cette formule permet donc de fixer la fraction du débit d'entrée à recevoir par chaque circuit à partir de la position du tiroir mobile.

En effet, chaque position du tiroir 26 mobile fixe la fraction du débit d'entrée reçue par le circuit pilote 9a et la fraction du débit d'entrée reçue par le circuit principal 9b, quelle que soit le débit d'entrée du carburant.

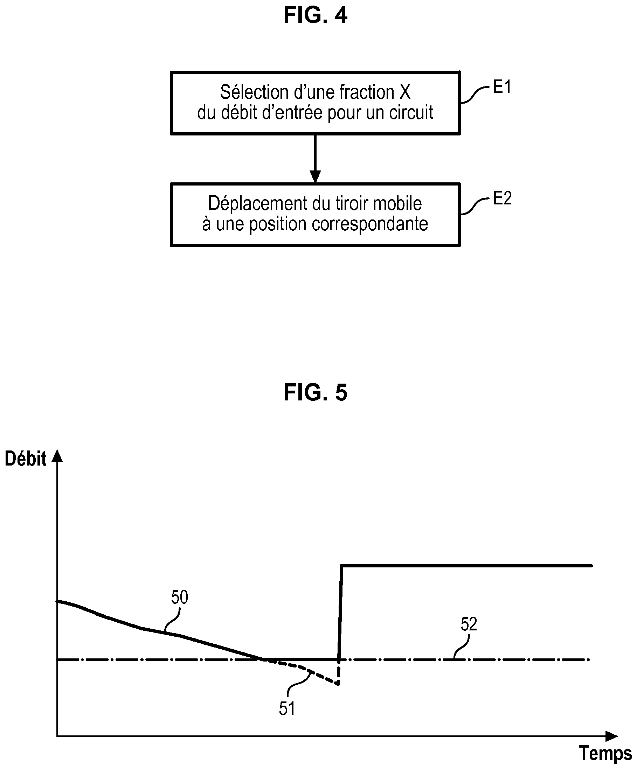

Un contrôle de la répartition du débit d'entrée (cf. Figure 4) peut comprendre les étapes consistant à :

-    sélectionner (étape E1) une fraction X du débit d'entrée du carburant à recevoir par le circuit pilote 9a ou par le circuit principal 9b, avec X compris entre 0 et 100%. Comme on le comprend, la sélection de la fraction X pour l'un des circuits fixe la fraction de l'autre circuit, qui reçoit la fraction complémentaire 1-X du débit, et
-    déplacer (étape E2) le tiroir 26 mobile à une position permettant d'obtenir ladite fraction X. Cette position est connue, car il a été souligné plus haut que la fraction X du débit d'entrée ne dépend que des sections découvertes de passage du carburant en entrée des circuits, et éventuellement d'une constante $K_{circuit}$ (voir les formules ci-dessus).

Ainsi, le procédé permet de sélectionner toute fraction du débit d'entrée pour chaque circuit comprise entre 0 et 100%, ce qui assure une précision et un contrôle sur une large gamme de valeurs.

En Figure 5, on a représenté l'évolution du débit dans le circuit pilote 9a en fonction du temps, suite à une commande de répartition du débit.

Suite à cette commande, le débit dans le circuit pilote 9a (courbe 50) diminue jusqu'à atteindre un débit minimal 52.

Afin d'éviter que le débit dans le circuit pilote 9a ne descende en-dessous du débit minimal 52, le procédé comprend l'étape consistant à corriger la répartition du débit d'entrée du carburant de sorte à respecter le débit minimal pour le circuit pilote 9a. Le calculateur modifie en conséquence la position du tiroir 26 mobile. Grâce à cette commande, et comme illustré en Figure 5, le débit reçu par le circuit pilote 9a s'éloigne du débit minimal 52.

Le procédé s'applique de manière identique pour le respect d'un débit maximal. Cette correction peut s'appliquer aussi bien au circuit pilote 9a et/ou au circuit principal 9b.

Le calculateur, recevant la valeur du débit d'entrée du carburant et la valeur de répartition du carburant entre les circuits, peut modifier la position du tiroir mobile 26 en fonction de paramètres comme la richesse dans la chambre de combustion, ou les débits maximaux et minimaux à respecter pour chaque circuit.

En outre, grâce aux formules de répartition du débit d'entrée énoncées ci-dessus, le procédé peut comprendre l'étape consistant à contrôler la position du tiroir 26 mobile de sorte à cantonner la surface de la section de passage du carburant du circuit pilote 9a, respectivement du circuit principal 9b, dans un intervalle donné, afin de respecter :

- une plage prédéfinie de débit minimal et maximal pour le circuit pilote 9a, et le circuit principal 9b ;
- une plage prédéfinie pour la perte de charge du circuit pilote 9a, le circuit principal 9b (correspondant à la différence de pression entre l'entrée du régulateur de débit et l'entrée du circuit, respectivement pilote et principal). Cette plage dépend par exemple des équipements en sortie des circuits, et de leurs spécifications en pression admissible.

Le procédé de régulation améliore le contrôle en répartition. En particulier, le contrôle à partir d'un unique tiroir mobile permet de réduire l'encombrement et la masse de l'ensemble. En outre, les erreurs de répartition sont réduites. Enfin, le contrôle de la répartition du débit d'entrée, basé sur la position du tiroir mobile, est simplifié.

**Revendications**

1. Système carburant (1) pour une turbomachine, adapté pour injecter du carburant dans une chambre de combustion (8) de la turbomachine, comprenant :

   - un circuit pilote (9a), adapté pour injecter du carburant dans la chambre de combustion (8),
   - un circuit principal (9b), adapté pour injecter du carburant dans la chambre de combustion (8), et
   - un régulateur de débit (2), adapté pour réguler le débit du carburant dans le circuit pilote (9a) et dans le circuit principal (9b) en fonction du régime de la turbomachine, ledit régulateur de débit (2) comprenant un tiroir (26) mobile entre une première configuration, dans laquelle le circuit principal (9b) est obturé et le circuit pilote (9a) est passant, et une deuxième configuration dans laquelle à la fois le circuit principal (9b) et le circuit pilote (9a) sont passants, le système carburant (1) comprend en outre :
   - un réservoir de carburant (5),
   - une pompe haute pression (6), adaptée pour mettre en pression le carburant en sortie du réservoir de carburant (5), le système carburant (1) étant **caractérisé en ce qu'**il comprend en outre
   - un réservoir de purge (4), connecté d'un côté sélectivement au réservoir (5) ou à la pompe haute pression (6), et d'un autre côté au circuit principal (9b), ledit réservoir de purge (4) étant adapté pour aspirer, stocker et purger du carburant dans le circuit principal (9b) en fonction de la différence de pression entre le circuit principal (9b) et le réservoir (5) ou la pompe haute pression (6) auquel il est connecté.

2. Système carburant (1) selon la revendication 1, comprenant en outre, en aval du régulateur de débit (2), un régulateur de pression (3) adapté pour modifier la pression dans le circuit pilote (9a) et le circuit principal (9b) et réduire les différences de pertes de charges entre le circuit pilote (9a) et le circuit principal (9b) en amont du régulateur de pression (3).

3. Système carburant (1) selon la revendication 2, dans lequel le réservoir de purge (4) est connecté au circuit principal (9b) en aval du régulateur de pression (3).

4. Système carburant (1) selon l'une des revendications 1 à 3, dans lequel le réservoir de purge (4) est piloté par le régulateur de débit (2) qui connecte sélectivement le réservoir de purge (4) au réservoir de carburant (5) ou à la pompe haute pression (6), de sorte que :

   - dans la première configuration du tiroir (26), le réservoir de purge (4) est connecté au réservoir et stocke du carburant contenu dans le circuit principal (9b), et
   - dans la deuxième configuration du tiroir (26), le réservoir de purge (4) est connecté à la pompe haute pression (6) et purge dans le circuit principal (9b) le carburant stocké lorsque le tiroir (26) était dans la première configuration.

5. Système carburant (1) selon l'une des revendications 2 ou 3, dans lequel le régulateur de pression (3) comprend des moyens de régulation (38, Pa, Pb) adaptés pour modifier une section de passage du circuit principal (9b) et du circuit pilote (9a) en aval du régulateur de débit (2) afin limiter les pertes de charges dans lesdits circuits (9a, 9b).

6. Système carburant (1) selon la revendication 5, dans lequel les moyens de régulation sont pilotés par deux pressions antagonistes (Pa, Pb) correspondant respectivement à la pression (Pa) à l'entrée du circuit pilote (9a) et à la pression (Pb) à l'entrée du circuit principal (9b) afin d'adapter la section de passage desdits circuits principal et pilote (9a, 9b).

7. Système carburant (1) selon la revendication 6, dans lequel les moyens de régulation comprennent en outre un tiroir (38) adapté pour ajuster la section de passage du circuit principal (9b) et du circuit pilote (9a), la position du tiroir (38) étant en équilibre dynamique en fonction de la pression (Pa) à l'entrée du circuit pilote (9a) et de la pression (Pb) à l'entrée du circuit principal (9b).

8.  Système carburant (1) selon l'une des revendications 1 à 7, comprenant en outre une unité de dosage de carburant FMU (7) en amont du régulateur de débit (2).

9.  Système carburant (1) selon l'une des revendications 1 à 8, dans lequel le régulateur de débit (2) est actionné par une servovalve (20) et comprend en outre un capteur électrique passif de déplacements linéaires LVDT (21) adapté pour déterminer la configuration du tiroir (26) dans le régulateur de débit (2).

10. Turbomachine comprenant une chambre de combustion (8), **caractérisée en ce qu'**elle comprend un système carburant (1) adapté pour injecter du carburant dans la chambre de combustion (8) selon l'une des revendications 1 à 9.

11. Procédé de régulation, **caractérisé en ce qu'**il met en oeuvre un système carburant (1) injectant du carburant présentant un débit d'entrée dans une chambre de combustion (8) d'une turbomachine par l'intermédiaire d'un circuit pilote (9a) et d'un circuit principal (9b) selon l'une des revendications 1 à 9, ledit procédé de régulation comprenant les étapes suivantes :

    - réguler la répartition du débit du carburant dans le circuit pilote (9a) et dans le circuit principal (9b) en fonction du régime de la turbomachine, en déplaçant le tiroir (26) mobile entre la première configuration, dans laquelle le circuit principal (9b) est obturé et le circuit pilote (9a) est passant, et la deuxième configuration dans laquelle à la fois le circuit principal (9b) et le circuit pilote (9a) sont passants, et
    - piloter le réservoir de purge (4) en fonction de la position du tiroir (26) mobile du régulateur de débit (2), en connectant sélectivement le réservoir de purge (4) au réservoir (5) ou la pompe haute pression (6) de manière à aspirer, stocker ou purger du carburant dans le circuit principal (9b).

12. Procédé de régulation selon la revendication 11, dans lequel :

    - la répartition du débit d'entrée du carburant entre le circuit pilote (9a) et le circuit principal (9b) est régulée en contrôlant la position du tiroir (26) mobile qui modifie une section (Spilote) de passage du carburant en entrée du circuit pilote (9a) et une section (Sprincipale) de passage du carburant en entrée du circuit principal (9b), le circuit pilote (9a) et le circuit principal (9b) recevant ainsi chacun une fraction du débit d'entrée,

    - chaque position du tiroir (26) mobile fixant la fraction du débit d'entrée reçue par le circuit pilote (9a) et la fraction du débit d'entrée reçue par le circuit principal (9b), quelle que soit le débit d'entrée du carburant, permettant ainsi une régulation de la répartition du débit d'entrée à partir du contrôle de la position du tiroir (26), le procédé comprenant en outre une étape au cours de laquelle la répartition du débit d'entrée du carburant est corrigée de sorte à respecter un débit minimal ou maximal de carburant à recevoir pour le circuit pilote (9a) et/ou le circuit principal (9b).

**Patentansprüche**

1.  Kraftstoffsystem (1) für eine Turbomaschine, ausgebildet, um Kraftstoff in eine Verbrennungskammer (8) der Turbomaschine einzuspritzen, umfassend:

    - einen Steuerkreis (9a), der ausgebildet ist, um Kraftstoff in die Verbrennungskammer (8) einzuspritzen,
    - einen Hauptkreis (9b), der ausgebildet ist, um Kraftstoff in die Verbrennungskammer (8) einzuspritzen, und
    - einen Durchflussregler (2), der ausgebildet ist, um den Kraftstoffdurchfluss im Steuerkreis (9a) und im Hauptkreis (9b) in Abhängigkeit vom Betrieb der Turbomaschine zu regeln, wobei der Durchflussregler (2) einen Schieber (26) umfasst, der zwischen einer ersten Konfiguration, in welcher der Hauptkreis (9b) verschlossen und der Steuerkreis (9a) durchgängig ist, und einer zweiten Konfiguration, in welcher sowohl der Hauptkreis (9b) und der Steuerkreis (9a) durchgängig sind, bewegbar ist,

    wobei das Kraftstoffsystem (1) ferner umfasst:

    - ein Kraftstoffreservoir (5),
    - eine Hochdruckpumpe (6), die ausgebildet ist, um den Kraftstoff am Ausgang des Kraftstoffreservoirs (5) unter Druck zu setzen, wobei das Kraftstoffsystem (1) **dadurch gekennzeichnet ist, dass** es ferner umfasst:
    - ein Entleerungsreservoir (4), das auf einer Seite selektiv mit dem Reservoir (5) oder der Hochdruckpumpe (6) und auf einer anderen Seite mit dem Hauptkreis (9b) verbunden ist, wobei das Entleerungsreservoir (4) ausgebildet ist, um Kraftstoff in den Hauptkreis (9b) in Abhängigkeit vom Druckunterschied zwischen dem Hauptkreis (9b) und dem Reservoir (5) oder der Hochdruckpumpe (6) anzusaugen, zu lagern und zu entleeren, mit dem es verbunden ist.

2. Kraftstoffsystem (1) nach Anspruch 1, umfassend ferner nach dem Durchflussregler (2) einen Druckregler (3), der ausgebildet ist, um den Druck im Steuerkreis (9a) und dem Hauptkreis (9b) zu verändern und um die Lastverlustdifferenzen zwischen dem Steuerkreis (9a) und dem Hauptkreis (9b) vor dem Druckregler (3) zu reduzieren.

3. Kraftstoffsystem (1) nach Anspruch 2, wobei das Entleerungsreservoir (4) mit dem Hauptkreis (9b) nach dem Druckregler (3) verbunden ist.

4. Kraftstoffsystem (1) nach einem der Ansprüche 1 bis 3, wobei das Entleerungsreservoir (4) von dem Durchflussregler (2) gesteuert ist, der selektiv das Entleerungsreservoir (4) mit dem Kraftstoffreservoir (5) oder mit der Hochdruckpumpe (6) verbindet, so dass:

   - in der ersten Konfiguration des Schiebers (26) das Entleerungsreservoir (4) mit dem Reservoir verbunden ist und Kraftstoff, der im Hauptkreis (9b) enthalten ist, speichert, und
   - in der zweiten Konfiguration des Schiebers (26) das Entleerungsreservoir (4) mit der Hochdruckpumpe (6) verbunden ist und den gespeicherten Kraftstoff in den Hauptkreis (9b) entleert, wenn der Schieber (26) in der ersten Konfiguration war.

5. Kraftstoffsystem (1) nach einem der Ansprüche 2 oder 3, wobei der Druckregler (3) Einstellmittel (38, Pa, Pb) umfasst, die ausgebildet sind, um einen Durchgangsquerschnitt des Hauptkreises (9b) und des Steuerkreises (9a) nach dem Durchflussregler (2) zu verändern, um die Lastverluste in den Kreisen (9a, 9b) zu begrenzen.

6. Kraftstoffsystem (1) nach Anspruch 5, wobei die Einstellmittel von zwei antagonistischen Drücken (Pa, Pb) gesteuert sind, die jeweils dem Druck (Pa) am Eingang des Steuerkreises (9a) und dem Druck (Pb) am Eingang des Hauptkreises (9b) entsprechen, um den Durchgangsquerschnitt des Haupt- und Steuerkreises (9a, 9b) anzupassen.

7. Kraftstoffsystem (1) nach Anspruch 6, wobei die Einstellmittel ferner einen Schieber (38) umfassen, der ausgebildet ist, um den Durchgangsquerschnitt des Hauptkreises (9b) und des Steuerkreises (9a) einzustellen, wobei die Position des Schiebers (38) in Abhängigkeit vom Druck (Pa) am Eingang des Steuerkreises (9a) und vom Druck (Pb) am Eingang des Hauptkreis (9b) im dynamischen Gleichgewicht ist.

8. Kraftstoffsystem (1) nach einem der Ansprüche 1 bis 7, umfassend ferner eine Kraftstoffdosiereinheit FMU (7) vor dem Durchflussregler (2).

9. Kraftstoffsystem (1) nach einem der Ansprüche 1 bis 8, wobei der Durchflussregler (2) von einem Servoventil (20) betätigt wird und ferner einen passiven elektrischen Wegaufnehmer-Sensor LVDT (21) umfasst, der ausgebildet ist, um die Konfiguration des Schiebers (26) im Durchflussregler (2) zu bestimmen.

10. Turbomaschine, umfassend eine Verbrennungskammer (8), **dadurch gekennzeichnet, dass** sie ein Kraftstoffsystem (1) umfasst, das ausgebildet ist, um Kraftstoff in die Verbrennungskammer (8) nach einem der Ansprüche 1 bis 9 einzuspritzen.

11. Einstellverfahren, **dadurch gekennzeichnet, dass** es ein Kraftstoffsystem (1) umsetzt, das Kraftstoff einspritzt, aufweisend einen Eingangsdurchsatz in eine Verbrennungskammer (8) einer Turbomaschine über einen Steuerkreis (9a) und einen Hauptkreis (9b) nach einem der Ansprüche 1 bis 9, wobei das Einstellverfahren die folgenden Schritte umfasst:

   - Einstellen der Verteilung des Kraftstoffdurchflusses im Steuerkreis (9a) und im Hauptkreis (9b) in Abhängigkeit vom Betrieb der Turbomaschine durch Verlagern des bewegbaren Schiebers (26) zwischen der ersten Konfiguration, in welcher der Hauptkreis (9b) verschlossen und der Steuerkreis (9a) durchgängig ist, und der zweiten Konfiguration, in welcher sowohl der Hauptkreis (9b) und der Steuerkreis (9a) durchgängig sind, und
   - Steuern des Entleerungsreservoirs (4) in Abhängigkeit von der Position des bewegbaren Schiebers (26) des Durchflussreglers (2) durch selektives Verbinden des Entleerungsreservoirs (4) mit dem Reservoir (5) oder der Hochdruckpumpe (6), um Kraftstoff in den Hauptkreis (9b) anzusaugen, zu lagern und zu entleeren.

12. Einstellverfahren nach Anspruch 11, wobei:

   - die Aufteilung des Eingangsdurchsatzes des Kraftstoff zwischen dem Steuerkreis (9a) und dem Hauptkreis (9b) eingestellt wird durch Steuern der Position des bewegbaren Schiebers (26), der einen Durchgangsquerschnitt (Spilote) des Kraftstoffs am Eingang des Steuerkreises (9a) und einen Durchgangsquerschnitt (Sprincipale) des Kraftstoffs am Eingang des Hauptkreises (9b) verändert, wobei der Steuerkreis (9a) und der Hauptkreis (9b) somit jeder einen Teil des Eingangsdurchsatzes erhalten,
   - jede Position des bewegbaren Schiebers (26), welche den Teil des Eingangsdurchsatzes, erhalten vom Steuerkreis (9a), und den Teil des Eingangsdurchsatzes, erhalten vom Hauptkreis (9b), unabhängig vom Eingangsdurchsatz des Kraftstoffs festlegt, somit eine Einstellung der Aufteilung des Eingangsdurchsatzes ausgehend von der Steuerung der Position des Schiebers (26) erlaubt,

wobei das Verfahren ferner einen Schritt umfasst, bei dem die Aufteilung des Eingangsdurchsatzes des Kraftstoffs derart korrigiert wird, dass ein minimaler oder maximaler Durchsatz des zu erhaltenden Kraftstoffs für den Steuerkreis (9a) und/oder den Hauptkreis (9b) einzuhalten ist.

**Claims**

1. A fuel system (1) for a turbine engine, adapted to inject fuel into a combustion chamber (8) of the turbine engine, comprising:

   - a pilot circuit (9a), adapted to inject fuel into the combustion chamber (8),
   - a main circuit (9b), adapted to inject fuel into the combustion chamber (8), and
   - a flow rate regulator (2), adapted to regulate the fuel flow rate in the pilot circuit (9a) and in the main circuit (9b) as a function of the operating conditions of the turbine engine, said flow rate regulator (2) comprising a mobile spool (26) between a first configuration, in which the main circuit (9b) is blocked and the pilot circuit (9a) is passing, and a second configuration in which at the same time the main circuit (9b) and the pilot circuit (9a) are passing, the fuel system (1) further comprises:
   - a fuel tank (5),
   - a high-pressure pump (6), adapted to pressurise the fuel at the outlet of the fuel tank (5), the fuel system (1) being **characterized in that** it further comprises
   - a purge tank (4), connected on one side selectively to the tank (5) or to the high-pressure pump (6), and on another side to the main circuit (9b), said purge tank (4) being adapted to suction, store and purge fuel in the main circuit (9b) as a function of the pressure difference between the main circuit (9b) and the tank (5) or the high-pressure pump (6) to which it is connected.

2. The fuel system (1) according to claim 1, further comprising, downstream of the flow rate regulator (2), a pressure regulator (3) adapted to modify the pressure in the pilot circuit (9a) and the main circuit (9b) and reduce the differences in pressure losses between the pilot circuit (9a) and the main circuit (9b) upstream of the pressure regulator (3).

3. The fuel system (1) according to claim 2, wherein the purge tank (4) is connected to the main circuit (9b) downstream of the pressure regulator (3).

4. The fuel system (1) according to one of claims 1 to 3, wherein the purge tank (4) is controlled by the flow rate regulator (2) which selectively connects the purge tank (4) to the fuel tank (5) or to the high-pressure pump (6), such that:

   - in the first configuration of the spool (26), the purge tank (4) is connected to the tank and stores fuel contained in the main circuit (9b), and
   - in the second configuration of the spool (26), the purge tank (4) is connected to the high-pressure pump (6) and purges in the main circuit (9b) the fuel stored when the spool (26) was in the first configuration.

5. The fuel system (1) according to one of claims 2 or 3, wherein the pressure regulator (3) comprises regulating means (38, Pa, Pb) adapted to modify a passage section of the main circuit (9b) and of the pilot circuit (9a) downstream of the flow rate regulator (2) to limit the pressure losses in said circuits (9a, 9b).

6. The fuel system (1) according to claim 5, wherein the regulating means are controlled by two antagonist pressures (Pa, Pb) respectively corresponding to the pressure (Pa) at the inlet of the pilot circuit (9a) and to the pressure (Pb) at the inlet of the main circuit (9b) to adapt the passage section of said main and pilot circuits (9a, 9b).

7. The fuel system (1) according to claim 6, wherein the regulating means further comprise a spool (38) adapted to adjust the passage section of the main circuit (9b) and of the pilot circuit (9a), the position of the spool (38) being in dynamic balance as a function of the pressure (Pa) at the inlet of the pilot circuit (9a) and of the pressure (Pb) at the inlet of the main circuit (9b).

8. The fuel system (1) according to one of claims 1 to 7, further comprising a fuel metering unit FMU (7) upstream of the flow rate regulator (2).

9. The fuel system (1) according to one of claims 1 to 8, wherein the flow rate regulator (2) is actuated by a servo valve (20) and further comprises a linear variable differential transformer LVDT (21) adapted to determine the configuration of the spool (26) in the flow rate regulator (2).

10. A turbine engine comprising a combustion chamber (8), **characterized in that** it comprises a fuel system (1) adapted to inject fuel into the combustion chamber (8) according to one of claims 1 to 9.

11. A regulating method, **characterized in that** it uses a fuel system (1) injecting fuel having an inlet flow rate in a combustion chamber (8) of a turbine engine by means of a pilot circuit (9a) and a main circuit (9b) according to one of claims 1 to 9, said regulating method comprising the following steps:

- regulating distribution of the fuel flow rate in the pilot circuit (9a) and in the main circuit (9b) as a function of the operating conditions of the turbine engine by moving the mobile spool (26) between the first configuration, in which the main circuit (9b) is blocked and the pilot circuit (9a) is passing, and the second configuration in which at the same time the main circuit (9b) and the pilot circuit (9a) are passing, and
- controlling the purge tank (4) as a function of the position of the mobile spool (26) of the flow rate regulator (2) by selectively connecting the purge tank (4) to the tank (5) or the high-pressure pump (6) so as to suction, store or purge fuel in the main circuit (9b).

12. The regulating method according to claim 11, wherein:

- distribution of the inlet fuel flow rate between the pilot circuit (9a) and the main circuit (9b) is regulated by controlling the position of the mobile spool (26) which modifies a fuel passage section ($S_{pilot}$) at the inlet of the pilot circuit (9a) and a fuel passage section ($S_{main}$) at the inlet of the main circuit (9b), the pilot circuit (9a) and the main circuit (9b) each receiving a fraction of the inlet flow rate,
- each position of the mobile spool (26) fixing the fraction of the inlet flow rate received by the pilot circuit (9a) and the fraction of the inlet flow rate received by the main circuit (9b), irrespective of the inlet fuel flow rate, enabling regulation of the distribution of the inlet flow rate from control of the position of the spool (26),

the method further comprising a step during which distribution of the fuel inlet flow rate is corrected so as to respect a minimum or maximum flow rate of fuel to be received for the pilot circuit (9a) and/or the main circuit (9b).

# FIG. 1

# FIG. 2

# FIG. 3

# FIG. 4

Sélection d'une fraction X
du débit d'entrée pour un circuit — E1

Déplacement du tiroir mobile
à une position correspondante — E2

# FIG. 5

**Débit**

50

51

52

**Temps**

**EP 3 042 059 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5809771 A
- EP 2535644 A
- EP 2063087 A
- EP 1988267 A